# EUROPEAN PATENT APPLICATION

(11) **EP 4 521 441 A1**
(43) Date of publication of application: **12.03.2025**
(21) Application number: 24306340.1
(22) Date of filing: 08.08.2024
(51) Int. Cl.: H01H 85/02, H01H 85/36

(54) **SURGE PROTECTOR AND SURGE PROTECTION APPARATUS**

(30) Priority: 11.09.2023 CN 202311167796
(71) Applicant: Schneider Electric Industries SAS, 92500 Rueil-Malmaison (FR)
(72) Inventor: LI, Xiaodong, Shanghai, 201203 (CN); TANG, Biao, Shanghai, 201203 (CN); CHEN, Yu, Shanghai, 201203 (CN); GAO, Jingxiang, Shanghai, 201203 (CN); ZHANG, Meng, Shanghai, 201203 (CN); WANG, Hongliang, Shanghai, 201203 (CN)
(74) Representative: Manitz Finsterwald Patent- und Rechtsanwaltspartnerschaft mbB

(57) **Abstract**

Embodiments of the present disclosure provide a surge protector and a surge protection apparatus. The surge protector comprises: a housing comprising a line pin and a ground pin; a surge protection component accommodated in the housing and coupled to the ground pin, wherein the surge protection component has a width less than a height and a length to form a flat shape; and a tripping assembly, comprising: a fuse component arranged in the housing and entirely located at one side of the surge protection component in the height direction; and a separate component coupled between the fuse component and the surge protection component via an elastic component and adapted to be moved to a tripping position when the solder is melted.

## Description

### CROSS REFERENCE

This application claims the priority to Chinese Patent Application No. 202311167796.5 filed on September 11, 2023, and entitled "SURGE PROTECTOR AND SURGE PROTECTION APPARATUS", which is hereby incorporated by reference in its entirety.

### FIELD

Example embodiments of the present disclosure generally relate to the field of electronic device protection, and in particular, to a surge protector and a surge protection apparatus.

### BACKGROUND

A surge protector, also known as a lightning arrester, is an electronic device providing safety protection for various electronic devices, instrument gauges and communication lines. When a spike current or voltage is suddenly generated in an electrical circuit or a communication line due to external interference, the surge protector can be conducted and shunted in an extremely short time, thereby preventing the surge from damaging other devices in the circuit. To meet the requirements of surge discharge and failure tripping, a current surge protector generally has a single pole width of 18 mm, and a corresponding low-temperature soldering spot tripping mechanism generally has a width of about 15 mm. A surge protector of this size cannot meet the requirements of a compact product in the current market.

### SUMMARY

In a first aspect of the present disclosure, a surge protector is provided. The surge protector comprises: a housing comprising a line pin and a ground pin to facilitate coupling of the surge protector to a circuit to be protected; a surge protection component accommodated in the housing and coupled to the ground pin so as to be adapted to conduct when a voltage of the circuit exceeds a predetermined threshold value, wherein the surge protection component has a width less than a height and a length to form a flat shape; and a tripping assembly, comprising: a fuse component arranged in the housing and entirely located at one side of the surge protection component in a height direction, wherein the fuse component is coupled to the line pin and is electrically connected to the surge protection component by means of solder, and the solder is adapted to be melted in a case where a tripping condition is satisfied; and a separation component coupled between the fuse component and the surge protection component via an elastic component, and adapted to be moved to a tripping position under an action of an elastic force of the elastic component when the solder is melted, so that the fuse component is electrically disconnected from the surge protection component.

In some embodiments, the surge protector further comprises: a protrusion protruding from a soldering side edge located at one side of the surge protection component in the height direction, so as to be adapted to be coupled to the fuse component.

In some embodiments, the fuse component comprises: a pivot coupling segment coupled to the line pin via a connection leaf spring, and comprising a pivot coupling part, wherein the fuse component is coupled to the housing via the pivot coupling part; a solder coupling segment comprising a soldering slot which is suitable for the protrusion to enter and allows at least a part of the solder coupling segment and the protrusion to be soldered together by means of the solder; and an intermediate segment located between the pivot coupling segment and the solder coupling segment in an extending direction of the fuse component, and forming non-zero angles with the pivot coupling segment and the solder coupling segment, respectively.

In some embodiments, the housing comprises: a first half shell and a second half shell coupled together along a width direction of the housing; a pair of pivot coupling slots arranged on the first half shell and the second half shell, respectively; a pivot shaft coupled to the pivot coupling part and having ends respectively arranged within the pair of pivot coupling slots to allow the fuse component to rotate about the pivot shaft.

In some embodiments, the pivot coupling slot is a waist-shaped slot, and a center connection direction of the waist-shaped slot is perpendicular to the soldering side edge.

In some embodiments, the separation component comprises: a pushing part comprising an inclined pushing surface and a raised part located at an end of the inclined pushing surface, wherein the inclined pushing surface is adapted to abut against the intermediate segment and push the intermediate segment to rotate the fuse component when the solder is melted, so that the raised part abuts against the fuse component after the separating component moves to the tripping position.

In some embodiments, the housing further comprises an indication window; and wherein the separation component further comprises an indication sheet arranged to align with the indication window when the separation component is in the tripping position.

In some embodiments, the tripping assembly further comprises: a moving arm coupled to the separation component, and extending from the separation component along the height direction to a bottom side edge of the surge protection component opposite to the soldering side edge, and the moving arm comprising a trigger end adjacent to the bottom side edge, wherein the trigger end is adapted to trigger a signal output part when the separation component is in the tripping position, so as to output a tripping signal.

In some embodiments, the surge protector further comprises a plurality of convex points arranged on a surface of at least one of the separation component and the moving arm adjacent to the housing.

In some embodiments, the housing further comprises a guide part coupled to the separation component to guide movement of the separation component.

In some embodiments, the pivot coupling part comprises a pair of bent sheets which are bent perpendicular to the pivot coupling segment, and distances from the bent sheets to an extending centerline of the fuse component are not equal.

The tripping assembly and the surge protection component in the surge protector according to embodiments of the present disclosure are arranged vertically along the height direction, so that the space of the module in the height direction is fully utilized, and the occupation of the space in the width direction is reduced, thereby not only satisfying the function requirements, but also reducing the design size to the maximum extent, and facilitating the formation of an ultra-thin surge protector.

In a second aspect of the present disclosure, a surge protection apparatus is provided. The surge protection apparatus comprises: a base comprising a plurality of mounting positions; and a plurality of surge protectors according to the first aspect, arranged on the plurality of mounting positions in a detachable manner, respectively.

It should be appreciated that what is described in this Summary is not intended to limit critical features or essential features of embodiments of the disclosure, nor is it intended to limit the scope of the disclosure. Other features of the present disclosure will become readily appreciated from the following description.

### BRIEF DESCRIPTION OF THE DRAWINGS

The above and other features, advantages, and aspects of various embodiments of the present disclosure will become more apparent with reference to the following detailed description taken in conjunction with the accompanying drawings. In the drawings, the same or similar reference signs denote the same or similar elements, wherein:
FIG. 1 shows a perspective view of a surge protector according to an embodiment of the present disclosure in a normal operation state, wherein a part of a shell of the surge protector is treated to be transparent or is omitted;
FIG. 2 shows a front view of a surge protector according to an embodiment of the present disclosure in a normal operation state;
FIG. 3 shows a perspective view of a surge protector according to an embodiment of the present disclosure in a tripping state;
FIG. 4 shows a front view of a surge protector according to an embodiment of the present disclosure in a tripping state; and
FIG. 5 shows an exploded view of a surge protector according to an embodiment of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes and are not intended to limit the scope of the present disclosure.

It should be noted that the headings of any section/subsection provided herein are not limiting. Various embodiments are described throughout herein, and any type of embodiment can be included under any section/subsection. Furthermore, embodiments described in any section/subsection may be combined in any manner with any other embodiments described in the same section/subsection and/or different sections/subsections.

In the description of the embodiments of the present disclosure, the term "including" and the like should be understood as open-ended including, that is, "including but not limited to". The term "based on" should be read as "based at least in part on." The term "one embodiment" or "the embodiment" should be read as "at least one embodiment." The term "some embodiments" should be understood as "at least some embodiments." Other explicit and implicit definitions may also be included below. The terms "first", "second", etc. may refer to different or identical objects. Other explicit and implicit definitions may also be included below.

As mentioned in the foregoing, a surge protector is a device for protecting an electronic device from voltage or current surges that are sudden in a power system. It is commonly used to prevent damage to equipment by overvoltage or current shock, such as lightning strikes, grid faults, power switch operation, etc.

A surge protection component of the surge protector is a core assembly of the surge protector, and is usually in a non-conductive state when the voltage of the circuit in which the surge protector is located is within a normal range. Herein, non-conduction may refer to a case where only a very weak current can be conducted or no current is conducted. The surge protection components can quickly become conductive when the voltage in the circuit exceeds its rating, directing the energy of the excess voltage to ground to protect the device from damage. The surge protection component may include a metal oxide varistor (MOV), a transient voltage suppressor (TVS), a combination thereof, or the like.

Hereinafter, the concept of the present disclosure will be described mainly by taking an MOV-type surge protector as an example. It should be appreciated that embodiments employing other type of surge protection component are also similar, and will not be described in detail hereinafter.

An MOV-type surge protector generally includes a normal operation state, an overvoltage state, and a tripping state. In the normal operation state, a varistor is in a high resistance state, which does not affect the normal operation of a circuit in which the varistor is located. The resistance value may keep a high level in a set voltage range. When a circuit is subjected to a sudden overvoltage, such as a lightning strike or a power system failure, the voltage rises sharply, and when the line voltage exceeds a threshold voltage (also referred to as a rated voltage), the surge protector enters an overvoltage state. Once the line voltage exceeds the rated voltage of the varistor, the resistance begins to change.

In this process, the varistor shunt the overvoltage to ground, preventing the overvoltage from continuing to pass to the protected device. The overvoltage state generally lasts for a short period of time, and once the voltage falls below the set threshold, the resistance value of the varistor rises again. It should be noted that the varistor-type surge protector may gradually degrade after experiencing too many overvoltage events, leading to a decrease in their protection capability. Therefore, to ensure the effective use of a surge protector in protecting the circuit, low-temperature solder points are typically set in the surge protector. This allows the surge protector to trip when the surge protection component degrades to a certain extent, causing the low-temperature solder points to melt and prompting the user to replace it timely.

For a circuit with multiple phases of electricity, there is a corresponding single-pole surge protector for each phase, and there is also a special surge protector for grounding. For example, in a three-phase circuit, there are typically three single-pole surge protectors and one grounding surge protector. These protectors are usually arranged side by side in the width direction in switchgear. As the demand for compact switchgear increases, the width of surge protectors needs to be as small as possible.

As mentioned above, at present, the single pole width of the surge protector is generally 18 mm, with the corresponding width of low-temperature solder point tripping mechanism being around 15mm. However, this width cannot meet the increasing demand for compact products. Specifically, there is now a market demand for ultra-thin surge protector products, where the single-pole width of the surge protector is desired to be 9mm or 12mm, with a width of the corresponding tripping mechanism needing to be around 7mm or 10mm. The tripping mechanisms of the previous standard products with 18mm width cannot meet the size requirements of these ultra-thin products, necessitating the design of an ultra-thin low-temperature solder point tripping mechanism.

Embodiments of the present disclosure provide a surge protector and a surge protection apparatus, so as to solve or at least partially solve the described problems or other potential problems existing in a traditional surge protector. A surge protection apparatus according to an embodiment of the present disclosure refers to a device that can be arranged in a switching device such as a switchgear cabinet and is used to dispose a plurality of surge protectors. The surge protector herein refers to the single-polar surge protector mentioned above. That is to say, the surge protection apparatus may have a plurality of surge protectors corresponding to a plurality of phases of a circuit. The plurality of surge protectors are disposed in parallel on the base of the surge protection apparatus along the width direction W thereof, and are connected to respective phases of the circuit, so as to protect the circuit and the electronic device therein.

The surge protector according to embodiments of the present disclosure entirely arranges the fuse component 1031 in the tripping assembly 103 at one side of the flat surge protection component 102 (such as MOV), the width of the tripping assembly 103 can be effectively reduced, and the width thereof can be reduced to about 7 mm or 10 mm, and thus the width of the surge protector can be effectively reduced to about 9 mm or 12 mm. Thus, the requirement of the user for the ultra-thin low-temperature soldering spot tripping mechanism is satisfied.

The width direction W mentioned in embodiments of the present disclosure refers to the arrangement direction of the surge protectors in the surge protection apparatus, and generally refers to a direction in which the size of the flat type surge protection components 102 is smallest. The height direction H and the length direction (which may also be referred to as a depth direction D) mentioned in embodiment of the present disclosure are perpendicular to each other, and both are perpendicular to the width direction W. For example, the height direction H may be a direction (namely, a vertical direction) consistent with the direction of gravity when the width direction W is arranged in a horizontal direction, and the length direction is a direction perpendicular to the height direction H and the width direction W.

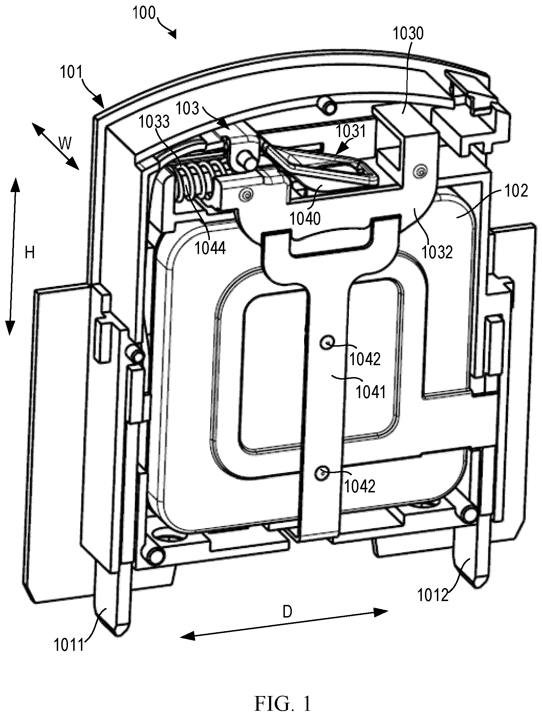

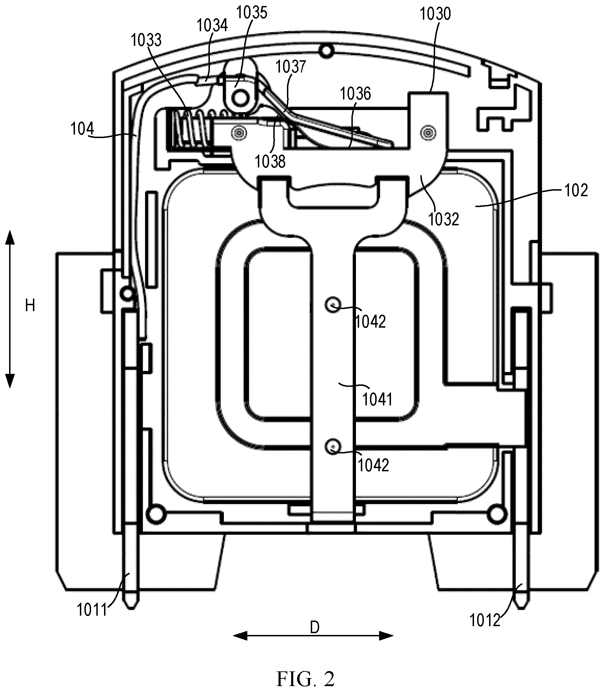

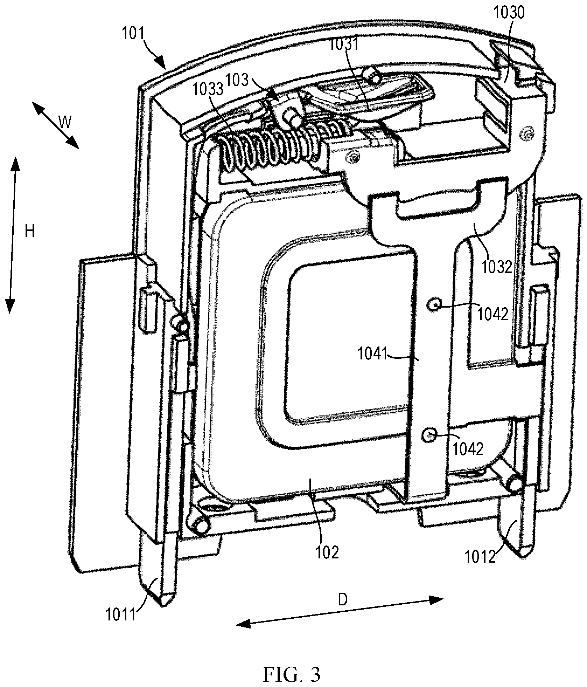

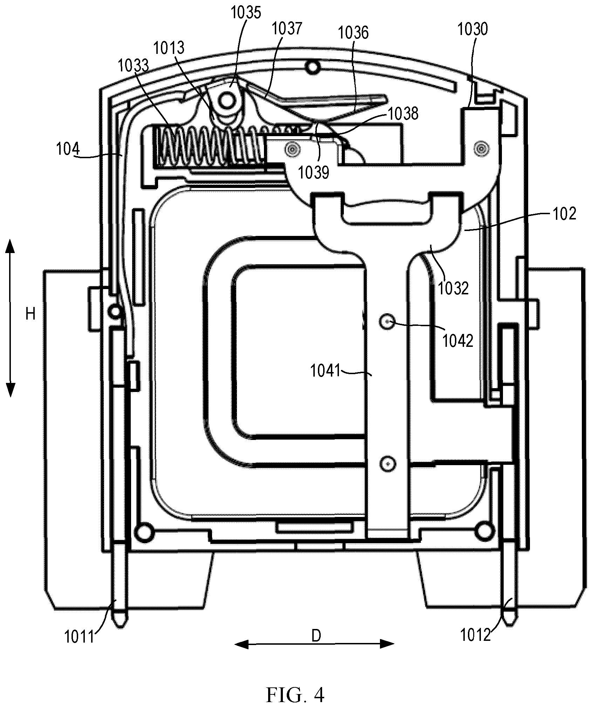

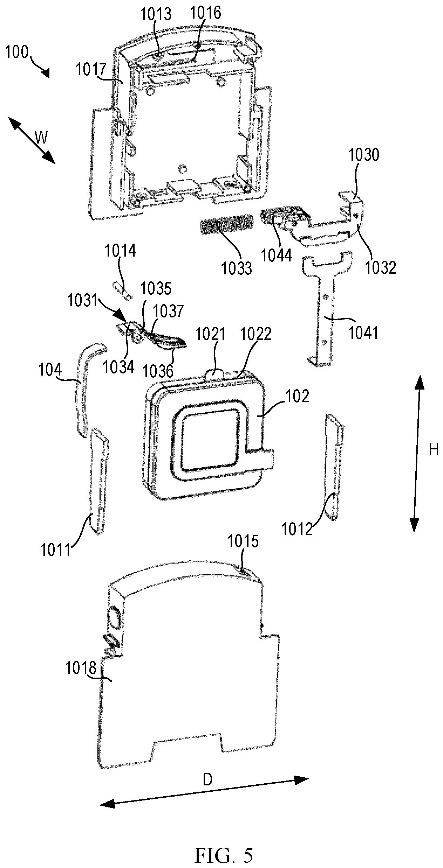

A surge protector 100 according to an embodiment of the present disclosure will be described below with reference to FIGS. 1 to 5. FIGS. 1 and 2 respectively show a perspective view and a front view of the surge protector 100 according to an embodiment of the present disclosure in a normal operation state, in which a part of a housing 101 of the surge protector 100 is transparentized or omitted for the purpose of showing components therein. FIGS. 3 and 4 respectively show a perspective view and a front view of the surge protector 100 according to an embodiment of the present disclosure in a tripping state; FIG. 5 illustrates an exploded view of a surge protector 100 according to an embodiment of the present disclosure.

As illustrated in FIGS. 1 through 5, in general, a surge protector 100 according to an embodiment of the present disclosure includes a housing 101, a surge protection component 102, and a tripping assembly 103. The housing 101 includes an accommodating space and a line pin 1011 and a ground pin 1012 protruding outward from the accommodating space. In order to accommodate the flat-shaped surge protection component 102, the accommodating space also has a flat shape. As mentioned in the foregoing, the flat shape herein refers to, for example, that a dimension (for example, a width in a width direction W) in one direction thereof is smaller than dimensions (for example, a height and a length) in the other two directions thereof, and the height and the length thereof may have a less difference therebetween. The side edges of the flat surge protection member 102 refer to the side edges in the height direction H and the depth direction D.

In some embodiments, the housing 101 may comprise two parts, which may be referred to as a first half shell 1017 and a second half shell 1018, respectively. It should be understood that, although they are referred to as the first half shell 1017 and the second half shell 1018, this does not mean that they have the same and symmetrical structure, but means that they are coupled together to form the housing 101. One of the two parts of the housing 101 may also be referred to as a bottom shell, and the other may be referred to as a cover, which is not limited in the present disclosure.

The first half shell 1017 and the second half shell 1018 are coupled together in the width direction W to form an internal accommodating space. This arrangement enables the surge protector 100 to be assembled more easily, thereby improving the assembling efficiency. The first half shell 1017 and the second half shell 1018 may be coupled together by any suitable means including, but not limited to, fastener (e. g., bolts, screws, rivets, etc. ) connections, snap connections, interference fit, adhesives, etc.

The line pin 1011 and ground pin 1012 protrude from the housing 101 to facilitate connection to respective phase of a corresponding line. Here, the line pin 1011 refers to a pin coupled to a line, and the ground pin 1012 refers to a pin coupled to a ground end. The line pin 1011 is coupled to the surge protection component 102 through the tripping assembly 103, and the other end of the surge protection component 102 is electrically connected to the ground pin 1012. In a normal operation state, since the surge protection component 102 has a relatively large internal resistance, it usually conducts no current or only a very weak current. When a circuit is subjected to a sudden overvoltage, such as a lightning strike or a power system failure, the voltage rises sharply, and the surge protection component 102 conducts (namely, the internal resistance decreases) when the voltage exceeds a predetermined threshold value, so as to effectively ground the overvoltage to protect the circuit and an electronic device therein.

That is, the surge protection component 102 is a component adapted to be conductive when the voltage of the circuit to which the line pin 1011 and the ground pin 1012 are connected exceeds a predetermined threshold. For example, in some embodiments, the surge protection component 102 may include a metal oxide varistor (MOV). In some alternate embodiments, the surge protection component 102 may also include a transient voltage suppressor (TVS) or a combination of MOV and TVS, etc. The embodiments of the present disclosure are not limited thereto.

The tripping assembly 103 includes a fuse component 1031 and an separation component 1032. The fuse component 1031 according to an embodiment of the present disclosure is arranged in the accommodating space, and is entirely located at one side of the surge protection component 102. That is to say, the tripping assembly 103 and the surge protection component 102 in the surge protector 100 according to embodiments of the present disclosure are arranged in an up-down direction along the height direction H, which makes full use of the height space of the module and reduces the occupation of the width space, thereby facilitating the formation of an ultra-thin surge protector 100.

The fuse component 1031 is coupled to the line pin 1011 through the connection leaf spring 104, and is electrically connected to the surge protection component 102 by using solder, where the solder is adapted to be melted when a tripping condition is satisfied, so as to achieve tripping. For example, with the increase of the number of overvoltage times, the surge protection component 102 and the connection part thereof are gradually degraded, so that when the tripping condition is satisfied, for example, the temperature at the solder is higher than the melting temperature of the solder to melt the solder, thereby facilitating the disengagement of the fuse component 1031 to achieve tripping.

In some embodiments, the fuse component 1031 has a bent structure along an extending direction, and includes a pivot coupling segment 1034, a solder coupling segment 1036, and an intermediate segment 1037 arranged therebetween in the extending direction. The bent structure can be bent roughly in a zigzag shape, and an angle between two adjacent segments is greater than 90 degrees, for example, in a range of 120 degrees to 150 degrees.

The pivot coupling segment 1034 is coupled to a connection leaf spring 104 (also referred to as a braid wire). The other end of the connection leaf spring 104 is coupled to the line pin 1011. The pivot coupling segment 1034 includes a pivot coupling part 1035. The fuse component 1031 is coupled to the housing 101 via the pivot coupling part 1035. For example, in some embodiments, the housing 101 may include a pair of pivot coupling slots 1013 and a pivot shaft 1014. The pair of pivot coupling slots 1013 are disposed on the first half shell 1017 and the second half shell 1018, respectively. The pivot shaft 1014 is coupled to the pivot coupling part 1035 and both ends are arranged within the pair of pivot coupling slots 1013, respectively, to allow the fuse component 1031 to rotate about the pivot shaft 1014.

In some embodiments, the pivot coupling part 1035 may be a pair of bent sheets bent perpendicularly from the body of the pivot coupling segment 1034. A hole aligned with the pivot coupling slot 1013 on the housing 101 in the width direction W is disposed on a pair of bent sheets, and the pivot shaft 1014 can pass through the hole on the bent sheets and the two ends are disposed in the pivot slots on the housing 101.

In some embodiments, the distances from the pair of bent sheets to the extending centerline of the fuse component 1031 are not equal. This is provided in good consideration of the structure of the two half-shells of the housing 101 and in order to reduce the width of the surge protector 100 as much as possible. By means of this arrangement, the connection strength between the bent sheets and the main body of the pivot coupling part 1035 can be ensured, and at the same time, the structure interference between the two half shells can also be avoided, thereby guaranteeing the reliability and further reducing the width of the surge protector 100 at the same time.

The solder coupling segment 1036 of the fuse component 1031 is soldered onto the surge protection component 102 by using solder. To facilitate soldering, in some embodiments, the surge protector 100 includes a protrusion 1021 protruding from one soldering side edge 1022 of the plurality of side edges of the surge protection component 102. Correspondingly, the solder coupling segment 1036 includes a solder coupling slot. The solder coupling slot is adapted to allow the protrusion 1021 to enter and allow at least a part of the solder coupling segment 1036 and the protrusion 1021 to be soldered together with solder. The solder coupling slot can be provided for the protrusion 1021 on the conventional surge protection component 102 such as the MOVs to enter, so that the fuse component 1031 can match most of the conventional surge protection components, thereby reducing the specific design cost of the surge protection components.

In some embodiments, a pair of side edges of the solder coupling segment 1036 in the width direction W and a part that transitions with the intermediate segment 1037 may be formed with a protruding edge 1040. The protruding edge 1040 can, on the one hand, enhance the bending strength between the solder coupling part and the intermediate segment 1037, and, on the other hand, facilitate the arrangement of the solder.

The separation component 1032 is coupled between the fuse component 1031 and the surge protection member 102 through an elastic member 1033. In some embodiments, the elastic component 1033 may be a compression spring or a tension spring. One end of the elastic component 1033 is coupled to the housing 101, and the other end is coupled to the separation component 1032. For example, in some embodiments, the separation component 1032 may include a coupling rod 1044 for sheathing the elastic member 1033 (for example, a compression spring) thereon, so that the structure is more stable.

The elastic force of the elastic component 1033 may act on the fuse component 1031 through the separation component 1032. When the surge protector 100 is in a normal operation state, the elastic force cannot push away or pull away the fuse component 1031 soldered on the surge protection component 102. When the tripping condition is satisfied, the solder is melted, and the bonding force between the fuse component 1031 and the surge protection component 102 is greatly reduced, so that the elastic force can push away or pull away the fuse component 1031 to disconnect the electrical connection between the fuse component 1031 and the surge protection component 102, and the separation component 1032 moves to a tripping position under the elastic force of the elastic component 1033. The separation component 1032 not only can serve to separate the fuse component 1031 and the surge protection member 102 to disconnect electrical connections, but also can serve to indicate the tripping state of the surge protector 100 intuitively and/or remotely, as will be described further below.

In some embodiments, the separation component 1032 also includes a pushing part that may include an inclined pushing surface 1038 and a raised part 1039 at an end of the inclined pushing surface 1038. The inclined pushing surface 1038 is adapted to abut against the intermediate segment 1037 of the fuse component 1031. The elastic force of the elastic component 1033 can act on the intermediate segment 1037 of the fuse component 1031, thereby facilitating the application of the elastic force on the fuse component 1031, so as to facilitate the rotation of the fuse component 1031 and the separation from the surge protection component 102. After the separation component 1032 is moved to the tripping position, the raised part 1039 abuts against the fuse component 1031, so that a safe distance is kept between the fuse component 1031, the surge protection component 102, and the protrusion 1021, thereby improving the reliability of the surge protector 100.

In some cases, the connection leaf spring 104 may be hardened with long-term use, thereby affecting separation between the fuse component 1031 and the surge protection component 102 during tripping. In some embodiments, in order to further reduce the force required for pushing separation between the fuse component 1031 and the surge protection component 102, the pivot coupling slot 1013 on the housing 101 may be set to be a waist-shaped slot. The connection direction of the centers of the waist-shaped slot is perpendicular to the soldering side edge 1022, i.e., extending along the height direction H. In this way, when the tripping condition is satisfied and the solder is melted, under the action of the elastic force of the elastic component 1033, the pushing part of the separation component 1032 pushes the fuse component 1031 to move upwards along the waist-shaped slot, and then is reversed, so that the angle required for separating the fuse component 1031 from the surge protection component 102 can be reduced. For example, in some embodiments, the angle required to separate the fuse component 1031 from the surge protection component 102 can be reduced from 27 degrees to 18 degrees, thereby facilitating the separation of the fuse component 1031 from the surge protection component 102 in the tripping process.

To achieve that the separation component 1032 visually indicates the tripping state of the surge protector 100, in some embodiments, the housing 101 may also include an indication window 1015. Correspondingly, the separation component 1032 further includes an indication sheet 1030 arranged to align with the indication window 1015 when the separation component 1032 is in the tripping position, such that a user can observe the indication sheet 1030 from the exterior to indicate that the surge protector 100 is tripped, thereby prompting the user to replace. In some embodiments, the indication sheet 1030 can take a more conspicuous color, such as red or orange, to facilitate reminding the user.

In some embodiments, the surge protection apparatus according to embodiments of the present disclosure may also implement remote indication (also referred to as remote signaling trigger) of a signal of the surge protector 100, in addition to being able to observe the state of the surge protector 100 in the field through the described indication sheet 1030. For example, in some embodiments, the tripping assembly 103 further includes a moving arm 1041 coupled to a separation component 1032. The moving arm 1041 extends from the separation component 1032 to a bottom side edge of the surge protection component 102 opposite to the soldering side edge 1022 on which the fuse component 1031 is arranged. For example, the moving arm 1041 may be in the form of a sheet, located at one side of the surge protection component 102 in the width direction W, and extending in the height direction H. The moving arm 1041 comprises a trigger end adjacent to the bottom side edge. The trigger end can trigger a signal output part of the surge protection apparatus when the separation component 1032 is in a tripping position, so as to remotely output a tripping signal.

In some embodiments, the separation component 1032 may be supported by an insulating material such as plastic, etc. To ensure strength while reducing width, the moving arm 1041 may be made of a thin metal sheet having a certain strength. In order to ensure coupling strength between the separation component 1032 and the moving arm 1041, a position of the moving arm 1041 coupled to the separation component 1032 may be formed into a fork shape, and may be coupled to the separation component 1032 in a riveting manner.

When tripping occurs, both the separation component 1032 and the moving arm 1041 move, thereby moving from the initial position to the tripping position, and the separation component 1032 and the moving arm 1041 have a small distance from the housing 101 in the width direction W. To facilitate sliding of the separation component 1032 and the moving arm 1041, in some embodiments, the surge protector 100 further includes a plurality of convex points 1042 disposed on a surface of at least one of the separation component 1032 and the moving arm 1041 adjacent to the housing 101. The convex point 1042 may be, for example, conical or truncated conical. By providing the convex points 1042, the surface friction between the separation component 1032 and the moving arm 1041 and the housing 101 can be adjusted to point friction, so that the friction can be greatly reduced, and the sliding of the separation component 1032 and the moving arm 1041 is more smooth.

In some embodiments, to make the sliding of the separation component 1032 more smooth and reliable, a guide part 1016 coupled to the separation component 1032 is also provided on the housing 101 (e.g., on the first half-shell 1017). For example, the guide part 1016 may be a rib protruding from the first half shell 1017 towards the internal space, and the separation component 1032 has a slot or a step structure corresponding thereto. In some alternative embodiments, the guide part 1016 may also be a slot or step structure formed on the housing 101, and the separation component 1032 has a corresponding convex rib. In this manner, the guide part 1016 can provide guidance for movement of the separation component 1032, thereby making movement of the separation component 1032 smoother and more reliable.

The various implementations of the present disclosure have been described above. The foregoing description is exemplary and not exhaustive, and is not limited to the disclosed implementations. Many modifications and changes will be apparent to those of ordinary skill in the art without departing from the scope and spirit of the described implementations. The terminology used herein is chosen to best explain the principles, practical applications, or improvements to the technology in the marketplace, or to enable other ordinary skilled artisans in the field to understand the various implementations disclosed herein.

## Claims

1. A surge protector, comprising:
a housing (101) comprising a line pin (1011) and a ground pin (1012) to facilitate coupling of the surge protector to a circuit to be protected;
a surge protection component (102) accommodated in the housing (101) and coupled to the ground pin (1012) so as to be adapted to conduct when a voltage of the circuit exceeds a predetermined threshold value, wherein the surge protection component (102) has a width less than a height and a length to form a flat shape; and
a tripping assembly (103), comprising:
a fuse component (1031) arranged in the housing (101) and entirely located at one side of the surge protection component (102) in a height direction (H), wherein the fuse component (1031) is coupled to the line pin (1011) and is electrically connected to the surge protection component (102) by means of solder, and the solder is adapted to be melted in a case where a tripping condition is satisfied; and
a separation component (1032) coupled between the fuse component (1031) and the surge protection component (102) via an elastic component (1033), and adapted to be moved to a tripping position under an action of an elastic force of the elastic component (1033) when the solder is melted, so that the fuse component (1031) is electrically disconnected from the surge protection component (102).

2. The surge protector of claim 1, further comprising:
a protrusion (1021) protruding from a soldering side edge (1022) located at one side of the surge protection component (102) in the height direction (H), so as to be adapted to be coupled to the fuse component (1031).

3. The surge protector of claim 2, wherein the fuse component (1031) comprises:
a pivot coupling segment (1034) coupled to the line pin (1011) via a connection leaf spring (104), and comprising a pivot coupling part (1035), wherein the fuse component (1031) is coupled to the housing (101) via the pivot coupling part (1035);
a solder coupling segment (1036) comprising a soldering slot which is suitable for the protrusion (1021) to enter and allows at least a part of the solder coupling segment (1036) and the protrusion (1021) to be soldered together by means of the solder; and
an intermediate segment (1037) located between the pivot coupling segment (1034) and the solder coupling segment (1036) in an extending direction of the fuse component (1031), and forming non-zero angles with the pivot coupling segment (1034) and the solder coupling segment (1036), respectively.

4. The surge protector of claim 3, wherein the housing (101) comprises:
a first half shell (1017) and a second half shell (1018) coupled together along a width direction (W) of the housing (101);
a pair of pivot coupling slots (1013) arranged on the first half shell (1017) and the second half shell (1018), respectively;
a pivot shaft (1014) coupled to the pivot coupling part (1035) and having ends respectively arranged within the pair of pivot coupling slots (1013) to allow the fuse component (1031) to rotate about the pivot shaft (1014).

5. The surge protector of claim 4, wherein the pivot coupling slot (1013) is a waist-shaped slot, and a center connection direction of the waist-shaped slot is perpendicular to the soldering side edge.

6. The surge protector of claim 4 or 5, wherein the separation component (1032) comprises:
a pushing part comprising an inclined pushing surface (1038) and a raised part (1039) located at an end of the inclined pushing surface (1038), wherein the inclined pushing surface (1038) is adapted to abut against the intermediate segment (1037) and push the intermediate segment (1037) to rotate the fuse component (1031) when the solder is melted, so that the raised part (1039) abuts against the fuse component (1031) after the separating component (1032) moves to the tripping position.

7. The surge protector of claim 6, wherein the housing (101) further comprises an indication window (1015); and
wherein the separation component (1032) further comprises an indication sheet (1030) arranged to align with the indication window (1015) when the separation component (1032) is in the tripping position.

8. The surge protector of claim 6, wherein the tripping assembly (103) further comprises:
a moving arm (1041) coupled to the separation component (1032), and extending from the separation component (1032) along the height direction (H) to a bottom side edge of the surge protection component (102) opposite to the soldering side edge, and the moving arm (1041) comprising a trigger end adjacent to the bottom side edge, wherein the trigger end is adapted to trigger a signal output part when the separation component (1032) is in the tripping position, so as to output a tripping signal.

9. The surge protector of claim 8, further comprising:
a plurality of convex points (1042) arranged on a surface of at least one of the separation component (1032) and the moving arm (1041) adjacent to the housing (101).

10. The surge protector of claim 6, wherein the housing (101) further comprises:
a guide part (1016) coupled to the separation component (1032) to guide movement of the separation component (1032).

11. The surge protector of any of claims 3-5, wherein the pivot coupling part (1035) comprises a pair of bent sheets which are bent perpendicular to the pivot coupling segment (1034), and distances from the bent sheets to an extending centerline of the fuse component (1031) are not equal.

12. A surge protection apparatus, comprising:
a base comprising a plurality of mounting positions; and
a plurality of surge protectors of any one of claims 1-11 arranged on the plurality of mounting positions in a detachable manner, respectively.
